# FASCICULE DE BREVET EUROPEEN

(11) **EP 3 094 486 B1**
(45) Date de publication et mention de la délivrance du brevet: **22.11.2017**
(21) Numéro de dépôt: 15704048.6
(22) Date de dépôt: 14.01.2015
(51) Int. Cl.: B32B 5/26, B32B 7/14, B31D 3/02, B32B 3/12

(54) **PROCEDE DE REALISATION D'UNE AME DE MATERIAU STRUCTURAL SANDWICH POLYMERE, AME ET MATERIAU**
VERFAHREN ZUR HERSTELLUNG EINER KERNSCHICHT EINES POLYMERISCHEN STRUKTURELLEN SANDWICHMATERIALES, DIESE KERNSCHICHT UND DIESES MATERIAL.
PROCESS FOR THE PREPARATION OF A CORE OF A POLYMERIC STRUCTURAL SANDWICH MATERIAL, SAID CORE AND SAID MATERIAL

(30) Priorité: 15.01.2014 FR 1450309
(43) Date de publication de la demande: 23.11.2016
(73) Titulaire: SAS Engineering Composite 3D, 14000 Caen (FR)
(72) Inventeur: BRUN, Frédéric, F-14000 Caen (FR)
(74) Mandataire: Cabinet Plasseraud
(86) Numéro de dépôt international: PCT/FR2015/050083
(87) Numéro de publication internationale: WO 2015/107295

(56) Documents cités:
- WO-A1-95/22668
- GB-A- 2 058 661
- US-A- 5 431 980
- US-A- 5 958 549
- HAROLD J BRANDON ET AL: "Aerodynamic Heating to Corrugation Stiffened Structures in Thick Turbulent Boundary Layers", AIAA JOURNAL,, vol. 13, no. 11, 1 novembre 1975 (1975-11-01), pages 1460-1466, XP001327567,

## Description

La présente invention est relative aux procédés de réalisation d'âmes de matériau structural sandwich polymère, aux âmes de matériau structural sandwich polymère obtenues par de tels procédés et aux matériaux structuraux comportant une telle âme.

Les matériaux structuraux sandwich sont généralement composés de deux peaux externes solidarisées sur les faces opposées d'une âme. Ladite âme est faite de telle sorte qu'elle possède une forte résistance structurale à la compression et à la flexion tout en conservant un poids minimal. Ces matériaux structuraux possèdent de nombreuses applications par exemple dans le domaine de l'aéronautique ou de l'automobile.

Parmi ces matériaux, les plus connus sont ceux comportant une âme en nid d'abeille. Ces âmes sont constituées de feuilles mises en forme puis fixées ensemble à des points précis pour constituer un réseau d'alvéoles de profil hexagonal, parfois déformé, qui s'étendent perpendiculairement audites peaux externes.

### ARRIERE PLAN TECHNOLOGIQUE

On connait du document US 5 431 980 des âmes de matériaux structuraux qui peuvent être utilisées pour créer des parois à la fois rigides, légères et courbes.

Pour ce faire, le document prévoit notamment une âme de matériau structural qui comporte des alvéoles en forme de nid d'abeille, lesquelles alvéoles présentent des côtés avec des formes particulières, du type avec des formes ondulées, des dessins en demi-cercle etc.

Les âmes sont réalisées à partir de bandes ondulées superposées les unes sur les autres, et reliées ponctuellement les unes aux autres par des zones de fixation. Les bandes ondulées présentant un motif répété sur toute leur longueur, et le motif comprend une zone plate en alternance avec une zone ondulée. Les zones plates de chaque bande ondulée sont fixées en alternance soit à une zone plate d'une bande ondulée supérieure soit à une zone plate d'une bande ondulée inférieure. Par ailleurs, l'âme de matériau est déployable entre un état compact et un état déployé par expansion des bandes ondulées superposées suivant une direction perpendiculaire à la direction desdites bandes ondulées superposées.

Ladite âme peut être réalisée dans une grande variété de matières constitutives dont par exemple des métaux comme de l'aluminium.

Avantageusement, on peut réaliser une telle âme en matériaux non-métalliques comme des matériaux polymères. Ceci permet d'accroître notamment la tenue au feu et de réduire le dégagement de fumées toxiques. Ceci permet également de réduire le coût de la structure, de simplifier le processus de réalisation et contrôler de façon optimale les caractéristiques mécaniques obtenues.

### OBJET DE L'INVENTION

L'invention a pour objectif de proposer une âme de matériau structural sandwich polymère présentant en particulier des caractéristiques mécaniques améliorées, une densité réduite et/ou un coût réduit.

A cette fin, l'invention a pour premier objet un procédé de réalisation d'une âme de matériau structural sandwich polymère comportant les étapes de :
fournir, au moins une première feuille de tissu polymère et une deuxième feuille de tissu polymère s'étendant respectivement sensiblement suivant des directions d'extension, une feuille parmi la première et la deuxième feuille comportant au moins une portion ondulée de feuille dans une direction d'épaisseur de feuille sensiblement perpendiculaire aux directions d'extension, la première et/ou la deuxième feuille comportant une pluralité des bandes adhésives,
superposer la première et la deuxième feuille selon la direction d'épaisseur de feuille pour obtenir un sandwich de feuilles,
presser le sandwich de feuilles selon la direction d'épaisseur de feuille de sorte à ce que les feuilles adhèrent entre elles à l'endroit de la pluralité des bandes adhésives,
étirer le sandwich de feuilles selon la direction d'épaisseur de feuille pour former une structure alvéolée comportant au moins une cellule, ladite cellule étant munie d'une portion ondulée de cellule sur au moins une face,
jusqu'à l'obtention d'une âme de matériau structural sandwich polymère d'une densité comprise dans une gamme de densités prédéfinie, réitérer les opérations de :
   disposer une résine au moins sur la portion ondulée de cellule de la structure alvéolée, et
   réticuler la résine pour obtenir une structure alvéolée résinée.

Dans des modes de réalisation préférés de l'invention, on peut éventuellement avoir recours en outre à l'une et/ou à l'autre des dispositions suivantes :
- l'étape de fournir au moins une première feuille de tissu polymère et une deuxième feuille de tissu polymère comporte :
   fournir une bande de tissu polymère s'étendant sensiblement suivant des directions d'extension,
   déformer au moins une portion de la bande de tissu polymère dans une direction d'épaisseur de feuille sensiblement perpendiculaire aux directions d'extension, de sorte à obtenir une portion ondulée de bande,
   disposer au moins une bande adhésive sur la bande de tissu polymère,
   découper la bande pour former au moins une première et une deuxième feuille de tissu polymère s'étendant respectivement sensiblement suivant les directions d'extension, une feuille au moins parmi la première et la deuxième feuille comportant la portion ondulée de bande, une feuille au moins parmi la première et la deuxième feuille comportant la bande adhésive ;
- la première et la deuxième feuille de tissu polymère comportent respectivement une première portion ondulée de feuille et une deuxième portion ondulée de feuille, et
   on superpose la première et la deuxième feuille pour obtenir un sandwich de feuilles de sorte à disposer la première et la deuxième portions ondulées de feuille en regard l'une de l'autre adhésive ;
- l'étape de presser le sandwich de feuilles comporte le chauffage du sandwich de feuilles pour activer la bande adhésive adhésive ;
- l'étape d'étirer le sandwich de feuilles pour former une structure alvéolée comporte une cuisson de la structure alvéolée à une température supérieure à une température de transition vitreuse du tissu polymère pour obtenir une structure alvéolée autoportante adhésive ;
- pour disposer une résine au moins sur la portion ondulée de cellule de la structure alvéolée on trempe la structure alvéolée dans un bain de résine.

L'invention a également pour objet une âme de matériau structural sandwich polymère s'étendant sensiblement suivant des directions d'extension d'âme et étant destinée à être comprise entre une surface supérieure et une surface inférieure, opposées selon une direction d'épaisseur d'âme, ladite âme comprenant une structure alvéolée résinée comportant au moins une cellule,
ladite structure alvéolée comportant un sandwich de feuilles, étiré selon une direction d'épaisseur de feuille, comprenant au moins une première feuille de tissu polymère et une deuxième feuille de tissu polymère s'étendant respectivement sensiblement suivant des directions d'extension, sensiblement perpendiculaires à la direction d'épaisseur de feuille, la première et la deuxième feuille adhérant l'une à l'autre à l'endroit d'une pluralité de bandes adhésives, une résine étant disposée, et réticulée, au moins sur ladite cellule de la structure alvéolée.

Une feuille parmi la première et la deuxième feuille de tissu polymère comporte au moins une portion ondulée de feuille, déformée dans la direction d'épaisseur de feuille,
ladite au moins une cellule est munie d'une portion ondulée de cellule sur au moins une face, et
la résine est disposée, et réticulée, au moins sur la portion ondulée de cellule de la structure alvéolée.

Dans des modes de réalisation préférés de l'invention, on peut éventuellement avoir recours en outre à l'une et/ou à l'autre des dispositions suivantes :
- une feuille parmi la première et la deuxième feuille de tissu polymère comporte une bande adhésive à l'endroit d'une portion ondulée de feuille ;
- la portion ondulée de feuille et la portion ondulée de cellule comportent une pluralité de motifs en débord, chaque motif en débord de la portion ondulée de feuille s'étendant sensiblement hors du plan d'extension formé par les directions d'extension feuille ;
- la portion ondulée de feuille présente une forme générale en zigzag comprenant au moins deux bosses feuille ;
- lesdites au moins deux bosses présentent chacune un sommet en pointe.

L'invention a enfin pour objet un matériau structural sandwich comprenant une âme telle que décrite ci-avant, ainsi qu'au moins une peau externe fixée à ladite âme.

### BREVE DESCRIPTION DES DESSINS

Pour pouvoir être exécutée, l'invention est exposée de façon suffisamment claire et complète dans la description suivante qui est, en plus, accompagnée de dessins dans lesquels :
- La figure 1 montre partiellement une âme de matériau structural, vue en perspective et sensiblement de dessus,
- La figure 2 montre un détail d'une âme de matériau structural selon l'invention, vue de face et illustrant en particulier une cellule,
- la figure 3 montre les étapes de fourniture de bande, déformation de la bande et dépôt d'adhésif d'un procédé de réalisation d'une âme de matériau structural sandwich polymère,
- la figure 4 illustre un détail de l'étape de déformation de la bande de la figure 3,
- la figure 5 montre un détail de l'étape de dépôt d'adhésif de la figure 3,
- la figure 6 montre les étapes de découpage de la bande, superposition des feuilles, pressage du sandwich de feuilles, étirage du sandwich de feuilles, dépôt de résine et réticulation de la résine d'un procédé de réalisation d'une âme de matériau structural sandwich polymère,
- la figure 7 illustre une structure alvéolée après l'étape d'étirage du sandwich de feuilles de la figure 6, et
- la figure 8 illustre une variante de la structure alvéolée après l'étape d'étirage du sandwich de feuilles de la figure 6.

### DESCRIPTION DETAILLEE

Dans la description qui suit, les termes « inférieur », « supérieur », « haut », « bas » etc... sont utilisés en référence aux dessins pour une plus grande facilité de compréhension. Ils ne doivent pas être compris comme étant des limitations de la portée de l'invention.

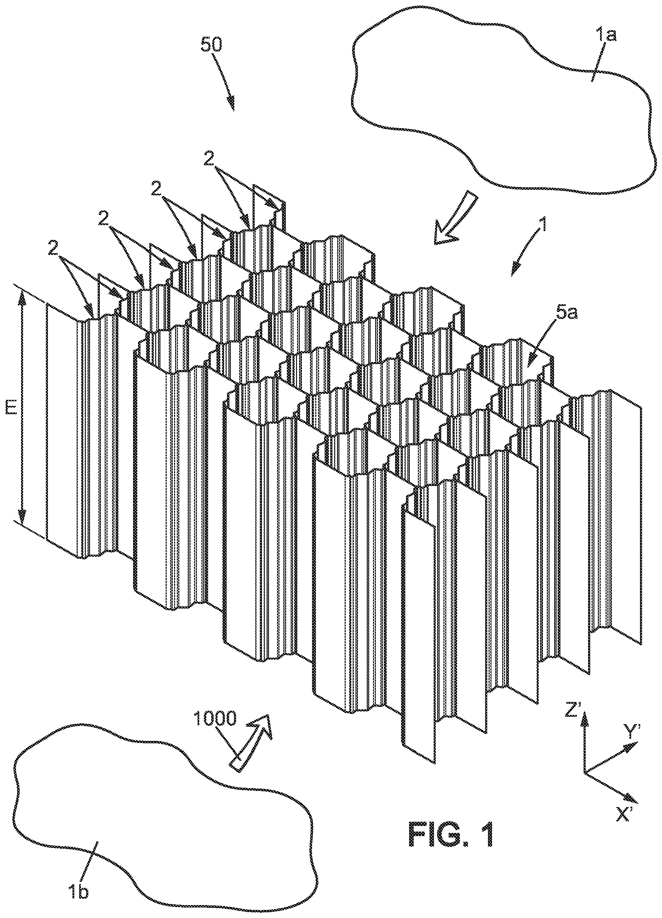

La figure 1 illustre une âme 1 conforme à l'invention.

L'âme 1 s'étend sensiblement suivant des directions d'extension d'âme X', Y' et est destinée à être comprise entre une surface supérieure 1a et une surface inférieure 1b, opposées selon une direction d'épaisseur d'âme Z', pour constituer un matériau structural sandwich 50.

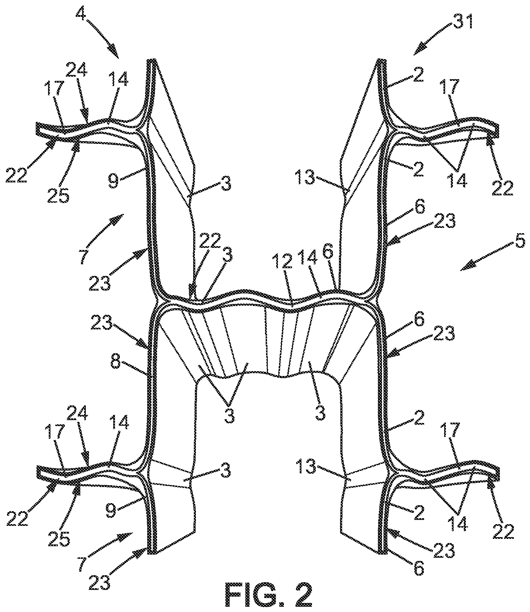

Dans l'exemple de réalisation illustré sur les figures 1 et 2, l'âme 1 comporte huit feuilles de tissu polymère 2 sous la forme de deux feuilles simples entourant trois assemblages de deux feuilles chacun, soit huit feuilles au total. Une âme de matériau structural conforme à l'invention n'est cependant pas limitée à la présence d'une quantité particulière de feuilles de tissu polymère 2, et, selon l'extension désirée de l'âme 1 dans les directions d'extension X' et Y', l'âme pourra comporter plus ou moins de feuilles de tissu polymère 2 sans sortir du cadre de l'invention.

Les feuilles 2 sont fabriquées en tissu polymère. En particulier, les feuilles 2 sont fabriquées à partir de fibres d'aramide, par exemple de méta-aramide ou para-aramide. De telles fibres peuvent par exemple être tissées ou amalgamées sous forme de pulpe pour former un papier synthétique léger et résistant. Un tel tissu polymère présente en particulier des caractéristiques de « mémoire de forme » qui sont exploitées par la présente invention comme détaillé ci-après.

Pour obtenir une âme de matériau structural sandwich polymère 1 résistante, on imprègne les feuilles 2 de tissu polymère avec une résine 3 durcie de sorte à obtenir un matériau composite résistant dans les trois dimensions de l'espace et pour autant particulièrement léger.

En se référant à présent plus particulièrement la figure 2 qui illustre un détail d'une âme 1 de matériau structural sandwich polymère selon l'invention, l'âme 1 comporte une structure alvéolée 4 comportant au moins une cellule 5. Avantageusement, la structure alvéolée 4 comporte un grand nombre de cellules 5 juxtaposées les unes aux autres selon les directions d'extension d'âme X', Y' pour former un réseau périodique de dimensions arbitraires.

Par « cellule », on entend ainsi par exemple une maille élémentaire dudit réseau périodique.

Par « structure alvéolée », on entend que la structure 4, bien que formée de feuilles 2 originellement planes, est une structure tridimensionnelle, les feuilles 2 étant assemblées et mises en forme pour former une structure de dimensions arbitraires, majoritairement composée de vide entre les feuilles 2, et présentant pour autant des caractéristiques de résistance mécanique élevées.

Chaque cellule 5 comporte une pluralité de faces 6, par exemple dans le cas des figures 1 et 2, cinq faces 6.

Avantageusement, les cellules 5 peuvent former, une fois juxtaposées les unes aux autres, un réseau d'alvéoles 5a hexagonales, avantageusement un réseau d'alvéoles 5a hexagonales régulières.

Par « alvéole », on entend ainsi une structure tridimensionnelle dont une section présente une forme fermée sur elle-même, en particulier un hexagone, dans le cas d'une alvéole d'un réseau de type « nid d'abeille ».

Le réseau périodique formé par la juxtaposition des cellules 3 peut ainsi être un réseau de type nid d'abeille.

Dans un tel réseau avec des alvéoles hexagones 5a, les cellules 5 peuvent être juxtaposées de telle sorte que chaque face 6 d'une cellule 5 constitue une face 6 de deux alvéoles 5a adjacentes.

La structure alvéolée 4 forme ainsi un réseau compact et résistant, avantageusement un réseau en «nid d'abeille».

Plus précisément comme illustré sur les figures 1 et 2, la structure alvéolée 4 comprend un sandwich de feuilles 7 comportant au moins une première feuille de tissu polymère 8 et une deuxième feuille de tissu polymère 9.

Les premières et deuxième feuille de tissu polymère s'étendent respectivement sensiblement suivant des directions d'extension X, Y. Elles sont mises en forme selon une direction d'épaisseur de feuille Z, sensiblement perpendiculaire aux directions d'extension X, Y, de sorte à ce que le sandwich de feuilles soit étiré selon la direction d'épaisseur de feuille.

Les directions d'extension X, Y et d'épaisseur de feuille Z ne sont usuellement pas colinéaires respectivement avec les directions d'extension de l'âme X', Y' et d'épaisseur d'âme Z' mais pivotées de 90°, de sorte que les directions d'extension X, Y sont respectivement colinéaires avec une directions d'extension d'âme X' et la direction d'épaisseur d'âme Z', tandis que la direction d'épaisseur de feuille Z est colinéaire avec une direction d'extension de l'âme Y'.

La première et la deuxième feuille de tissu polymère 8, 9 adhèrent en outre l'une à l'autre à l'endroit d'une pluralité des bandes adhésives 17.

Dans l'exemple de la figure 2, la résine 3 est en particulier disposée et réticulée à l'endroit de la bande adhésive 17.

Comme on peut le voir sur les figures 1, 2 et 8, l'âme de matériau structural sandwich 1 est en particulier telle que la première et la deuxième feuille de tissu polymère 8,9 comportent au moins une portion ondulée de feuille 11, avantageusement déformée dans la direction d'épaisseur de feuille Z.

Comme détaillé ci-après, les premières et deuxième feuille de tissu polymère 8, 9 sont mise en forme selon la direction d'épaisseur de feuille Z et le sandwich de feuille 7 est mis en forme pour former la structure alvéolée 4, lesdites portions ondulées de feuille 11 constituent alors des portions ondulées de cellule 12 disposées sur au moins une face 6 d'une cellule 5.

Ainsi, la portion ondulée de feuille 11 et la portion ondulée de cellule 12 peuvent comporter une pluralité de motifs en débord 14 de sorte à présenter une forme générale en zigzag, les motifs en débord 14 formant avantageusement au moins deux bosses.

La résine 3 est par exemple disposée et réticulée sur la portion ondulée de cellule 12 de la structure alvéolée 4.

De cette façon, la résine 3 forme une pluralité de ménisques 13 sur la portion ondulée de cellule 12 et plus particulièrement, un ménisque 13 au niveau de chaque motif en débord 14.

Les ménisques 13 permettent de rigidifier les motifs en débord 14 et ainsi d'augmenter la résistance à la traction et à la compression de l'âme de matériau structural sandwich polymère 1, en particulier selon les directions d'extension d'âme X' et Y'.

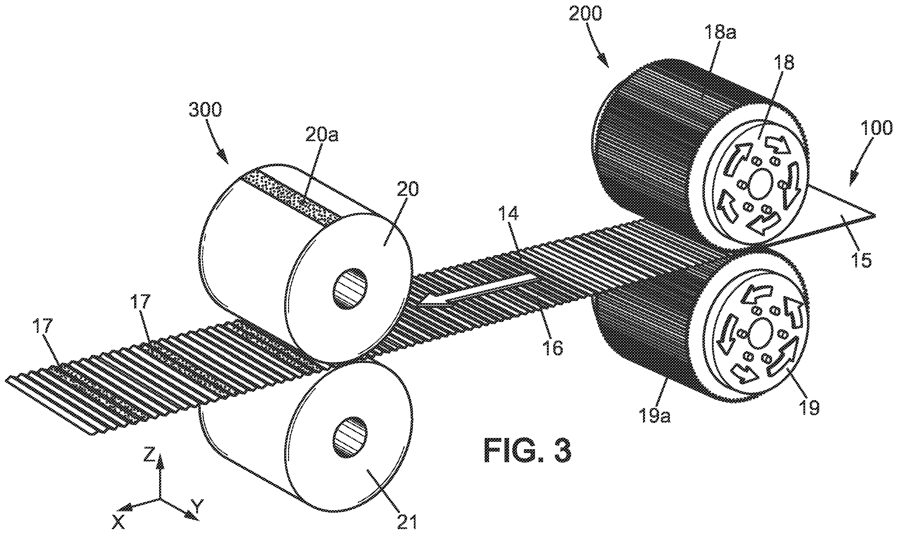

Un procédé pour réaliser une telle âme de matériau structural sandwich 1 et un tel matériau structural sandwich 50 va maintenant être décrit en se référant plus particulièrement aux figures 3 à 6.

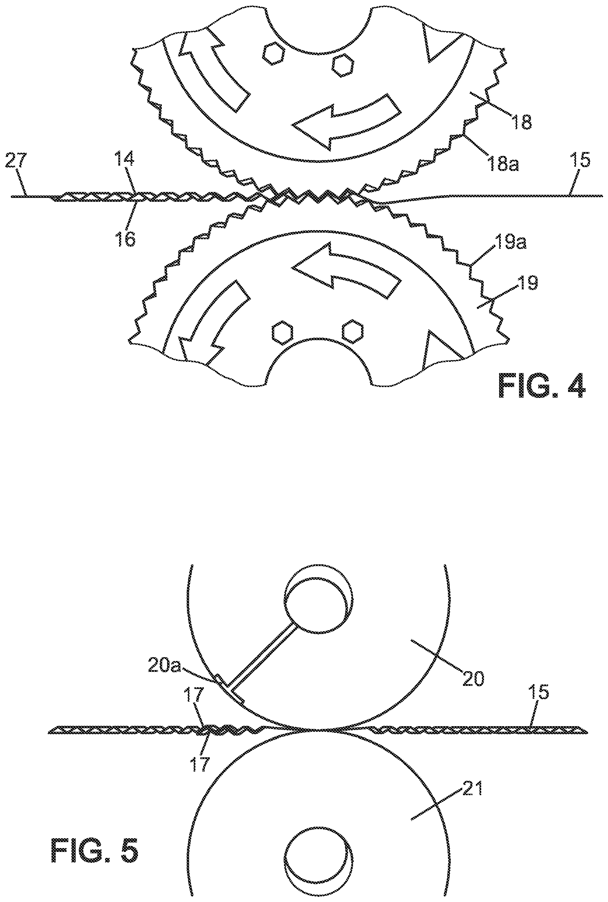

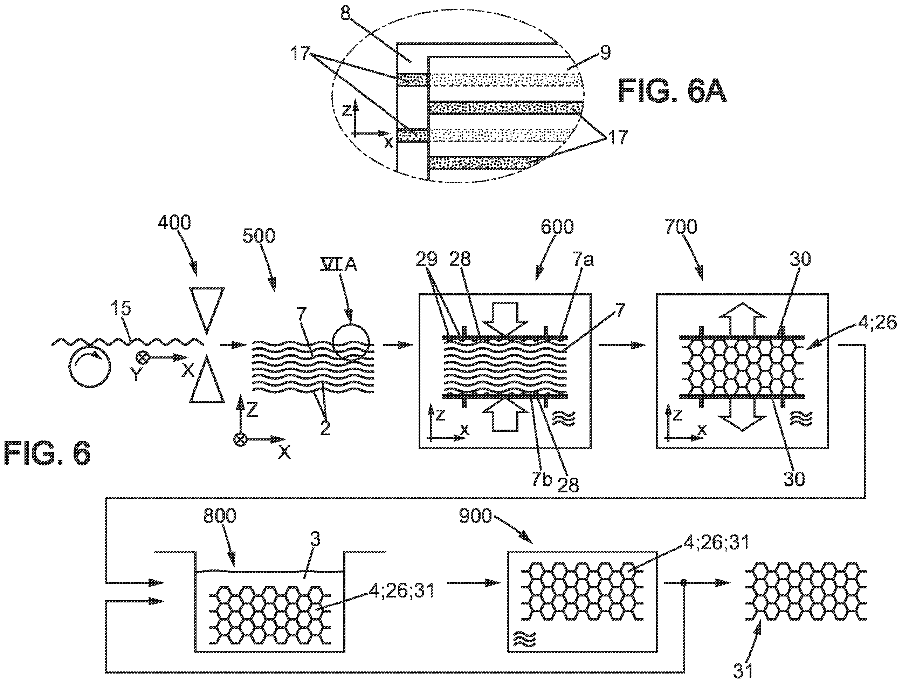

La figure 3 en relation avec les figures 4 et 5 illustre les premières étapes d'un tel procédé tandis que la figure 6, en relation avec les figures 6A, 7 et 8 illustre les étapes ultérieures du procédé.

Tel que présenté sur la figure 3, le procédé de réalisation d'une âme de matériau structural sandwich polymère 1 selon l'invention comporte tout d'abord une première étape 100 de fourniture d'une bande de tissu polymère 15.

Plus précisément, la bande de tissu polymère 15 peut s'étendre sensiblement suivant des directions d'extension X, Y comprenant une direction d'extension longitudinale X et une direction d'extension transversale Y.

La bande de tissu polymère 15 peut présenter une largeur définie, par exemple sensiblement également à l'épaisseur E souhaitée pour l'âme 1, selon la direction d'extension transversale Y, par exemple comprise entre quelques centimètres et quelques mètres. La bande de tissu polymère 15 peut par ailleurs présenter une longueur nettement plus importante selon la direction d'extension longitudinale X, par exemple de quelques mètres à plusieurs centaines de mètres. La bande de tissu polymère 15 peut ainsi être enroulée sur elle-même autour de la direction d'extension transversale Y, de sorte à former un rouleau de bande de tissu polymère déroulé au fur et à mesure de la fabrication de l'âme de matériau structural sandwich polymère 1.

Une telle bande de tissu polymère 15 est constitué d'un tissu polymère par exemple en fibres d'aramide tel que décrit ci-avant.

Dans une deuxième étape 200 de déformation de la bande, illustrée plus particulièrement sur la figure 4, on déforme au moins une portion de la bande de tissu polymère 15 selon la direction d'épaisseur de feuille Z, sensiblement perpendiculaire aux directions d'extension X, Y. On obtient ainsi une portion ondulée de bande 16.

Comme représenté sur la figure 4, on peut, à cette fin, comprimer la bande de tissu polymère 15 entre deux rouleaux de mise en forme 18, 19 dont les surfaces de contact avec la bande de tissu polymère présentent une pluralité de motifs gravés 18a, 19a.

La portion ondulée de bande 16 obtenue présente ainsi une pluralité de motifs en débord 14, chaque motif en débord 14 s'étendant sensiblement hors du plan d'extension XY formé par les directions d'extension X, Y.

Avantageusement, les motifs en débord 14 sont des motifs unidimensionnels selon la direction d'extension transversale Y. Les motifs en débord 14 sont par exemple des bandes ondulées, alignées selon la direction d'extension transversale Y, et présentant des ondulations ou des bosses selon la direction d'extension longitudinale X. Les motifs en débord 14 présentent ainsi une forme générale en zigzag dans une section selon un plan XZ perpendiculaire à la direction d'extension transversale Y.

Alternativement, les motifs en débord 14 peuvent être des motifs bidimensionnels s'étendant selon les directions d'extension longitudinale X et transversale Y.

Comme on peut le voir sur la figure 4, la totalité des surfaces de contact des rouleaux de mise en forme 18, 19 avec la bande de tissu polymère 15 peut être recouverte de motifs gravés 18a, 19a, de sorte que la bande de tissu polymère 15, une fois pressée entre les rouleaux 18 et 19, est ondulée sur toute son extension longitudinale, sans partie lisse résiduelle 27. Dans ce mode de réalisation, la portion ondulée de bande 16 constitue ainsi la totalité de la bande de tissu polymère 15.

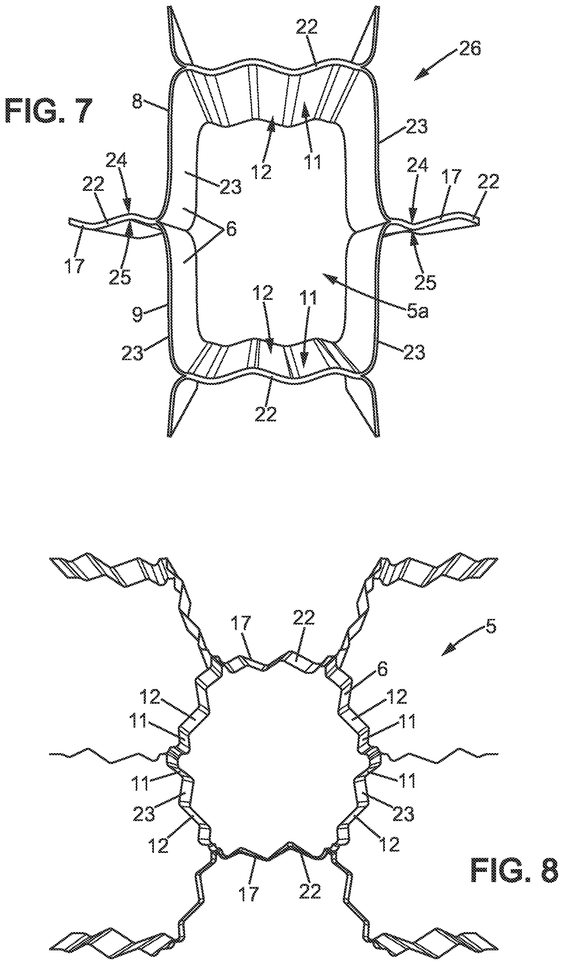

Dans ce mode de réalisation, on peut obtenir une structure alvéolée 4 telle que représentée sur la figure 8, dont la totalité des feuilles 2 est ondulée.

Alternativement, les surfaces de contact des rouleaux de mise en forme 18, 19 avec la bande de tissu polymère 15 peuvent comporter des parties lisses entre des motifs gravés 18a, 19a, de sorte que la bande de tissu polymère 15, une fois pressée entre les rouleaux 18 et 19, présente des parties lisses résiduelles 27.

Dans une troisième étape 300 de dépôt d'adhésif, illustré plus particulièrement sur la figure 5, on dispose une pluralité de bandes adhésives 17 sur la bande de tissu polymère 15. Les bandes adhésives peuvent par exemple s'étendre sensiblement selon la direction d'extension transversale Y. On dispose sur la bande de tissu polymère 15 une pluralité de bande adhésive 17 agencées par exemple de façon périodique, en particulier de façon périodique selon la direction d'extension longitudinale X. A cette fin, la bande de tissu polymère 15 peut être pressée entre deux rouleaux de dépôt d'adhésif 20, 21.

La surface de contact de l'un ou des deux rouleaux de dépôt d'adhésif 20, 21 peut en particulier comporter une ou plusieurs arrivées d'adhésif 20a permettant une amenée d'adhésif à l'endroit des surfaces de contact des rouleaux de dépôt d'adhésif 20, 21 avec la bande de tissu polymère 15.

Dans un mode de réalisation de l'invention, illustré en particulier sur les figures 2 et 8, plusieurs bandes adhésives 17 sont disposées sur une ou plusieurs portions ondulées de bande 16.

Dans un autre mode de réalisation de l'invention, illustré par exemple sur la figure 1, des bandes adhésives 17 peuvent être disposées sur des parties lisses résiduelles 27 de la bande de tissu polymère 15.

De façon avantageuse, les bandes adhésives 17 sont disposées sur la bande de tissu polymère 15 une fois que la bande de tissu polymère 15 a été déformée (étape 200) pour obtenir la portion ondulée de bande 16. La mémoire de forme du tissu polymère permet en effet à la bande de tissu polymère 15 d'être écrasée entre les surfaces de contact sensiblement planes des deux rouleaux de dépôt d'adhésif 20 et 21 sans que la portion ondulée de bande 16, mise en forme à l'étape de déformation 200, ne disparaisse.

Un tel arrangement des étapes du procédé de réalisation de l'âme, l'étape de disposition 300 de la bande adhésive étant réalisée postérieurement à l'étape de déformation 200, permet en outre de prévenir un dépôt d'adhésif sur les rouleaux de mise en forme 18, 19 qui peut survenir lorsque l'étape de déformation 200 est réalisée après l'étape de disposition 300.

Dans une quatrième étape 400 de découpage de la bande, on découpe la bande de tissu polymère 15 pour former une pluralité de feuilles de tissu polymère 2. On forme en particulier une première feuille de tissu polymère 8 et une deuxième feuille de tissu polymère 9.

Plus précisément, on découpe la bande de tissu polymère 15 de sorte à ce que une feuille au moins parmi la première et la deuxième feuille 8, 9 comporte la portion ondulée de bande 16 et de sorte à ce que une feuille au moins parmi la première et la deuxième feuille 8, 9 comporte les bandes adhésives 17.

A cette fin, comme illustré sur la figure 6, on peut découper la bande de tissu polymère 15 selon la direction d'extension transversale Y, pour former des feuilles de tissu polymère 2 sensiblement rectangulaires.

Dans une cinquième étape 500 de superposition des feuilles, également illustrée sur la figure 6, on superpose les feuilles de tissu polymère 2 les unes aux autres selon la direction d'épaisseur de feuille Z pour obtenir le sandwich de feuilles 7. Ainsi, en particulier en superpose la première et la deuxième feuille 8, 9 l'une à l'autre.

Plus précisément, la première et la deuxième feuille 8, 9 peuvent respectivement comporter une pluralité de bandes adhésives 17 s'étendant respectivement selon la direction d'extension transversale Y. On peut alors superposer la première feuille de tissu polymère 8 à la deuxième feuille de tissu polymère 9 de sorte à alterner, selon la direction d'extension longitudinale X, les bandes adhésives 17 respectives des premières et deuxième feuille 8, 9 comme illustré sur le détail de la figure 6A.

Par ailleurs, la première et la deuxième feuille de tissu polymère 8, 9 peuvent respectivement comporter une première portion ondulée de feuille 24 et une deuxième portion ondulée de feuille 25. Il est alors avantageux de superposer la première feuille de tissu polymère 8 à la deuxième feuille de tissu polymère 9 de sorte à disposer la première portion ondulée de feuille 24 en regard de la deuxième portion ondulée de feuille 25. Plus précisément, les motifs en débord 14 des premières et deuxième portions ondulées de feuille 24, 25 peuvent être alignés.

Alternativement, les étapes de fourniture (100), de déformation (200), de dépôt d'adhésif (300), de découpage de la bande (400) et de superposition (500) décrites ci-avant peuvent être réalisées dans un ordre différent, en omettant certaines de ces étapes et/ou en ajoutant des étapes intermédiaires supplémentaires.

Ainsi à titre d'exemple, les étapes de déformation (200), de dépôt d'adhésif (300) et de superposition (500) peuvent être réalisées directement sur des feuilles de tissu polymère prédécoupées au lieu d'une bande de tissu polymère.

Une sixième étape 600 de pressage du sandwich de feuilles comprend le pressage du sandwich de feuilles 7 selon la direction d'épaisseur de feuille Z. Comme représenté schématiquement sur la figure 6, on peut disposer à cette fin le sandwich de feuilles 7 à plat dans une presse apte à comprimer le sandwich de feuilles 7 selon la direction d'épaisseur de feuille Z. Cette sixième étape du procédé permet ainsi de faire adhérer entre elles les feuilles 2 adjacentes à l'endroit des bandes adhésives 17 de sorte à ce que le sandwich de feuilles 7 forme une structure unique et solidaire.

Au cours de cette étape 600, on peut en outre chauffer le sandwich de feuilles 7 en particulier pour activer la bande adhésive 17.

Dans un mode de réalisation avantageux de l'étape 600, les surfaces 28 de la presse en contact avec le sandwich de feuilles 7 peuvent comporter des motifs gravés 29 similaires aux motifs en débord 14 des feuilles 2 du sandwich de feuilles 7. De cette façon, l'étape de presse permet une adhésion optimale des feuilles 2 entre elles.

Au cours d'une septième étape 700 d'étirage du sandwich, on étire, selon la direction d'épaisseur de feuille Z, le sandwich de feuilles 7 obtenu après l'étape de pressage 600 pour former la structure alvéolée 4 illustré sur la figure 7.

A cette fin, il est par exemple possible de fixer deux supports d'étirage 30, respectivement sur une extrémité supérieure 7a et une extrémité inférieure 7b du sandwich de feuilles 7 opposées selon la direction d'épaisseur de feuille Z. Les deux supports d'étirage 30 sont ensuite déplacés et éloignés l'un de l'autre, selon la direction d'épaisseur de feuille Z, de sorte à espacer l'une de l'autre les extrémités supérieures 7a et inférieures 7b du sandwich de feuilles 7 pour étirer ledit sandwich 7 et former une structure alvéolée 4.

La structure alvéolée 4 ainsi obtenue comporte une pluralité de cellules 5, chaque cellule 5 comportant une pluralité de faces 6.

Plus précisément, comme cela est visible sur la figure 7, la pluralité de faces 6 peut comporter comporte une ou plusieurs faces doubles 22, chaque face double 22 étant constituée par deux feuilles 2 collées ensemble par des bandes adhésives 17, par exemple la première feuille de tissu polymère 8 et la deuxième feuille de tissu polymère 9. La pluralité de face 6 comporte également une ou plusieurs faces uniques 23, chaque face unique 23 étant constituée par une unique feuille 2.

Selon la disposition des bandes adhésives 17, on peut alors obtenir différentes configurations pour la structure alvéolée 4.

Ainsi, dans le mode de réalisation illustré sur la figure 6, dans lequel les bandes adhésives 17 liant des feuilles 2 adjacentes sont alternées selon la direction d'extension longitudinale X, comme cela est visible en particulier sur la figure 6A, l'étape d'étirage 700 permet d'obtenir une structure alvéolée 4 de type « nid d'abeille», avec des alvéoles 5a, formées par le réseau de cellules 5, de forme sensiblement hexagonale. Chaque cellule 5 comporte dans ce mode de réalisation cinq faces 6, dont quatre faces uniques 23 reliées entre elles deux à deux par une face double 22.

Les alvéoles 5a du réseau formé par les cellules 5 présentent ainsi une forme de prisme comportant une base située dans un plan perpendiculaire XZ à la direction d'extension transversale Y, et s'étendant selon ladite direction d'extension transversale Y. Les alvéoles 5a du réseau formé par les cellules 5 présentent en particulier une forme de prisme hexagonal dans l'exemple des figures 1 et 2.

Selon la distance d'étirage, ledit prisme hexagonal peut être régulier ou bien être étiré ou comprimé selon la direction d'épaisseur de feuille Z.

Les faces 6 des cellules 5 peuvent ne pas être des faces strictement planes mais présenter une forme générale courbe en particulier comme la forme présentée par les faces uniques 23 de la cellule 5 de la figure 7.

Par ailleurs, la cellule 5 comporte une portion ondulée de cellule 12 correspondant à la portion ondulée de feuille 11, après l'étape d'étirage 700.

La portion ondulée de cellule 12 peut être localisée au niveau d'une bande adhésive 17 joignant deux feuilles 2, c'est-à-dire au niveau d'une face double 22, comme illustré sur la figure 2.

Alternativement, la portion ondulée de cellule 12 peut être localisée hors des bandes adhésives 17, sur une face unique 23 de la cellule 5.

Cette septième étape du procédé 700, peut en outre comporter une cuisson de la structure alvéolée 4 permettant d'obtenir une structure alvéolée autoportante 26. Une telle cuisson de la structure alvéolée 4 peut par exemple être réalisée par chauffage à une température supérieure à une température de transition vitreuse du tissu polymère, de sorte à faire fondre puis re-solidifier ledit tissu polymère, au moins partiellement. Suite à une telle cuisson, la structure alvéolée 4 adopte alors la forme étirée comme forme au repos. Avantageusement, la cuisson de la structure alvéolée 4 permet de détacher la structure alvéolée 4, rendue autoportante, des supports d'étirage 30 et donc de simplifier les étapes ultérieures du procédé en augmentant la pureté et la qualité de l'âme 1 obtenue au final.

Au cours d'une huitième étape 800 de dépôt de résine, illustré figure 6, on dispose la résine 3 au moins sur la portion ondulée de cellule 12 de la structure alvéolée 4.

Pour cela, on trempe par exemple la structure alvéolée 4 dans un bain de résine 3.

Puis, au cours d'une neuvième étape 900 de réticulation, on réticule la résine 3 pour obtenir une structure alvéolée résinée 31. La réticulation de la résine 3 peut par exemple être réalisée par chauffage, et permet de durcir la résine 3 disposée sur la structure alvéolée 4.

On obtient ainsi une structure alvéolée résinée 31, comportant la structure alvéolée 4 sur laquelle est disposée et réticulée la résine 3 de sorte à obtenir les caractéristique mécaniques souhaitées pour l'âme 1.

Les huitièmes et neuvièmes étapes du procédé 800, 900 peuvent avantageusement être réitérées jusqu'à obtention d'une âme de matériau structural sandwich polymère 1 d'une densité comprise dans une gamme de densité prédéfinie.

Un procédé de réalisation d'un matériau structural sandwich 50 comprendra avantageusement une dixième étape 1000 d'adjonction de peaux, comportant l'adjonction d'une surface supérieure 27 et/ou d'une surface inférieure 28 sur l'âme 1, de sorte en particulier à fermer les ouvertures des cellules 5 de la structure alvéolée.

La surface supérieure 27 et la surface inférieure 28 constituent ainsi des peaux externes à l'âme 1 permettant de protéger les ouvertures des cellules 5 et donc de constituer un matériau structural sandwich 50 résistant.

## Revendications

1. Procédé de réalisation d'une âme de matériau structural sandwich polymère, comportant les étapes de :
- fournir (100, 200, 300, 400), au moins une première feuille de tissu polymère (8) et une deuxième feuille de tissu polymère (9) s'étendant respectivement sensiblement suivant des directions d'extension (X, Y), une feuille parmi la première et la deuxième feuille comportant au moins une portion ondulée de feuille (11) dans une direction d'épaisseur de feuille (Z) sensiblement perpendiculaire aux directions d'extension, la première et/ou la deuxième feuille comportant une pluralité de bandes adhésives (17),
- superposer (500) la première et la deuxième feuille selon la direction d'épaisseur de feuille pour obtenir un sandwich de feuilles (7),
- presser (600) le sandwich de feuilles selon la direction d'épaisseur de feuille de sorte à ce que les feuilles adhèrent entre elles à l'endroit de la pluralité de bandes adhésives,
- étirer (700) le sandwich de feuilles selon la direction d'épaisseur de feuille pour former une structure alvéolée (4) comportant au moins une cellule (5), ladite cellule étant munie d'une portion ondulée de cellule (12) sur au moins une face (6),
- jusqu'à l'obtention d'une âme de matériau structural sandwich polymère (1) d'une densité comprise dans une gamme de densités prédéfinie, réitérer les opérations de :
• disposer (800) une résine (3) au moins sur la portion ondulée de cellule de la structure alvéolée (4 ; 31), et
• réticuler (900) la résine pour obtenir une structure alvéolée résinée (31).

2. Procédé selon la revendication 1, dans lequel l'étape de fournir au moins une première feuille de tissu polymère (8) et une deuxième feuille de tissu polymère (9) comporte :
- fournir (100) une bande de tissu polymère (15) s'étendant sensiblement suivant des directions d'extension (X, Y),
- déformer (200) au moins une portion de la bande de tissu polymère dans une direction d'épaisseur de feuille (Z) sensiblement perpendiculaire aux directions d'extension, de sorte à obtenir une portion ondulée de bande (16),
- disposer (300) au moins une bande adhésive (17) sur la bande de tissu polymère,
- découper (400) la bande pour former au moins une première et une deuxième feuille de tissu polymère (8, 9) s'étendant respectivement sensiblement suivant les directions d'extension, une feuille au moins parmi la première et la deuxième feuille comportant la portion ondulée de bande, une feuille au moins parmi la première et la deuxième feuille comportant la bande adhésive.

3. Procédé selon l'une quelconque des revendications 1 et 2, dans lequel la première et la deuxième feuille de tissu polymère (8, 9) comportent respectivement une première portion ondulée de feuille (24) et une deuxième portion ondulée de feuille (25), et
dans lequel on superpose (500) la première et la deuxième feuille (8, 9) pour obtenir un sandwich de feuilles (7) de sorte à disposer la première et la deuxième portions ondulées de feuille en regard l'une de l'autre.

4. Procédé selon l'une quelconque des revendications 1 à 3, dans lequel l'étape de presser (600) le sandwich de feuilles (7) comporte le chauffage du sandwich de feuilles pour activer la bande adhésive (17).

5. Procédé selon l'une quelconque des revendications 1 à 4, dans lequel l'étape d'étirer (700) le sandwich de feuilles (7) pour former une structure alvéolée (4) comporte une cuisson de la structure alvéolée à une température supérieure à une température de transition vitreuse du tissu polymère pour obtenir une structure alvéolée autoportante (26).

6. Procédé selon l'une quelconque des revendications 1 à 5, dans lequel pour disposer (800) une résine (3) au moins sur la portion ondulée de cellule (12) de la structure alvéolée (4 ; 26 ; 31) on trempe la structure alvéolée dans un bain de résine.

7. Ame de matériau structural sandwich polymère (1) s'étendant sensiblement suivant des directions d'extension d'âme (X', Y') et étant destinée à être comprise entre une surface supérieure (1a) et une surface inférieure (1b), opposées selon une direction d'épaisseur d'âme (Z'), ladite âme comprenant une structure alvéolée résinée (31) comportant au moins une cellule (5),
ladite structure alvéolée comportant un sandwich de feuilles (7), étiré selon une direction d'épaisseur de feuille (Z), comprenant au moins une première feuille de tissu polymère (8) et une deuxième feuille de tissu polymère (9) s'étendant respectivement sensiblement suivant des directions d'extension (X, Y), sensiblement perpendiculaires à la direction d'épaisseur de feuille (Z), la première et la deuxième feuille (8, 9) adhérant l'une à l'autre à l'endroit d'une pluralité de bandes adhésives (17),
une résine (3) étant disposée, et réticulée, au moins sur ladite cellule (5) de la structure alvéolée(4),
l'âme étant **caractérisée en ce qu'**une feuille parmi la première et la deuxième feuille de tissu polymère comporte au moins une portion ondulée de feuille (11), déformée dans la direction d'épaisseur de feuille (Z),
**en ce que** ladite au moins une cellule est munie d'une portion ondulée de cellule (12) sur au moins une face (6), et
**en ce que** la résine (3) est disposée, et réticulée, au moins sur la portion ondulée de cellule de la structure alvéolée.

8. Ame selon la revendication 7, dans laquelle une feuille parmi la première et la deuxième feuille de tissu polymère (8, 9) comporte une bande adhésive (17) à l'endroit d'une portion ondulée de feuille (11).

9. Ame selon l'une quelconque des revendications 7 et 8, dans laquelle la portion ondulée de feuille (11) et la portion ondulée de cellule (12) comportent une pluralité de motifs en débord (14), chaque motif en débord de la portion ondulée de feuille (11) s'étendant sensiblement hors du plan d'extension (XY) formé par les directions d'extension (X, Y).

10. Ame selon l'une quelconque des revendications 7 à 9, dans laquelle la portion ondulée de feuille (11) présente une forme générale en zigzag comprenant au moins deux bosses.

11. Ame selon la revendication 10, dans laquelle lesdites au moins deux bosses présentent chacune un sommet en pointe.

12. Matériau structural sandwich (50) comprenant une âme (1) selon l'une quelconque des revendications 7 à 11, ainsi qu'au moins une peau externe (1a, 1b) fixée à ladite âme.

## Patentansprüche

1. Verfahren zur Herstellung einer Kernschicht eines polymeren strukturellen Sandwichmaterials, mit den folgenden Schritten:
- Bereitstellen (100, 200, 300, 400) mindestens einer ersten Polymergewebeschicht (8) und einer zweiten Polymergewebeschicht (9), die sich jeweils im Wesentlichen in Erstreckungsrichtungen (X, Y) erstrecken, wobei die erste oder die zweite Schicht mindestens einen welligen Schichtabschnitt (11) in Schichtdickenrichtung (Z), die im Wesentlichen senkrecht zu den Erstreckungsrichtungen ist, aufweist, wobei die erste und/oder die zweite Schicht mehrere Klebebänder (17) aufweist,
- Übereinanderlegen (500) der ersten und der zweiten Schicht in Schichtdickenrichtung, um ein Schichtsandwich (7) zu erhalten,
- Pressen (600) des Schichtsandwichs in Schichtdickenrichtung, derart, dass die Schichten am Ort der mehreren Klebebänder aneinander kleben,
- Auseinanderziehen (700) des Schichtsandwichs in Schichtdickenrichtung, um eine Wabenstruktur (4) zu bilden, die mindestens eine Zelle (5) aufweist, wobei die Zelle an mindestens einer Fläche (6) mit einem welligen Zellenabschnitt (12) versehen ist,
- Wiederholen der folgenden Arbeitsgänge, bis eine Kernschicht eines polymeren strukturellen Sandwichmaterials (1) erzielt ist, deren Dichte in einem vorab festgelegten Dichtebereich ist:
* Anordnen (800) eines Harzes (3) zumindest an dem welligen Zellenabschnitt der Wabenstruktur (4; 31) und
* Vernetzen (900) des Harzes, um eine geharzte Wabenstruktur (31) zu erhalten.

2. Verfahren nach Anspruch 1, in welchem der Schritt des Bereitstellens mindestens einer ersten Polymergewebeschicht (8) und einer zweiten Polymergewebeschicht (9) aufweist:
- Bereitstellen (100) eines Polymergewebebands (15), das sich im Wesentlichen in die Erstreckungsrichtungen (X, Y) erstreckt,
- Verformen (200) mindestens eines Abschnitts des Polymergewebebands in eine zu den Erstreckungsrichtungen im Wesentlichen senkrechte Schichtdickenrichtung (Z), um einen welligen Bandabschnitt (16) zu erhalten,
- Anordnen (300) mindestens eines Klebebands (17) an dem Polymergewebeband,
- Zuschneiden (400) des Bands, um mindestens eine erste und eine zweite Polymergewebeschicht (8, 9) zu bilden, die sich jeweils im Wesentlichen entlang der Erstreckungsrichtungen erstrecken, wobei die erste und/oder zweite Schicht den welligen Bandabschnitt aufweist und die erste und/oder zweite Schicht das Klebeband aufweist.

3. Verfahren nach einem der Ansprüche 1 und 2, in welchem die erste und die zweite Polymergewebeschicht (8, 9) jeweils einen ersten welligen Schichtabschnitt (24) und einen zweiten welligen Schichtabschnitt (25) aufweisen, und
in welchem zur Bildung eines Schichtsandwichs (7) die erste und die zweite Schicht (8, 9) derart übereinandergelegt werden, dass der erste und der zweite wellige Schichtabschnitt sich gegenüberliegen.

4. Verfahren nach einem der Ansprüche 1 bis 3, in welchem der Schritt des Pressens (600) des Schichtsandwichs (7) das Erhitzen des Schichtsandwichs aufweist, um das Klebeband (17) zu aktivieren.

5. Verfahren nach einem der Ansprüche 1 bis 4, in welchem der Schritt des Auseinanderziehens (700) des Schichtsandwichs (7) zur Bildung einer Wabenstruktur (4) ein Aushärten der Wabenstruktur bei einer Temperatur, die höher als eine Glasübergangstemperatur des Polymergewebes ist, aufweist, um eine selbsttragende Wabenstruktur (26) zu erzielen.

6. Verfahren nach einem der Ansprüche 1 bis 5, in welchem zum Anordnen (800) eines Harzes (3) zumindest an dem welligen Zellenabschnitt (12) der Wabenstruktur (4; 26; 31) die Wabenstruktur in ein Harzbad getaucht wird.

7. Kernschicht eines polymeren strukturellen Sandwichmaterials (1), die sich im Wesentlichen in Kernschichterstreckungsrichtungen (X',Y') erstreckt und vorgesehen ist, zwischen einer oberen Fläche (1a) und einer unteren Fläche (1b), die sich in Kerndickenrichtung (Z') gegenüberliegen, angeordnet zu werden, wobei die Kernschicht eine geharzte Wabenstruktur (31) mit mindestens einer Zelle (5) aufweist,
wobei die Wabenstruktur ein in Schichtdickenrichtung (Z) auseinandergezogenes Schichtsandwich (7) aufweist, das mindestens eine erste Polymergewebeschicht (8) und eine zweite Polymergewebeschicht (9) aufweist, die sich jeweils im Wesentlichen in Erstreckungsrichtungen (X, Y), die im Wesentlichen senkrecht zur Schichtdickenrichtung (Z) sind, erstrecken, wobei die erste und die zweite Schicht (8, 9) am Ort mehrerer Klebebänder (17) aneinander kleben,
wobei zumindest an der Zelle (5) der Wabenstruktur (4) ein Harz (3) angeordnet und vernetzt ist,
wobei die Kernschicht **dadurch gekennzeichnet ist, dass** die erste oder die zweite Polymergewebeschicht mindestens einen in Schichtdickenrichtung (Z) verformten, welligen Schichtabschnitt (11) aufweist,
dadurch, dass mindestens eine Zelle an mindestens einer Fläche (6) mit einem welligen Zellenabschnitt (12) versehen ist, und
dadurch, dass zumindest an dem welligen Zellenabschnitt der Wabenstruktur das Harz (3) angeordnet und vernetzt ist.

8. Kernschicht nach Anspruch 7, in welcher die erste oder die zweite Polymergewebeschicht (8, 9) an dem Ort eines welligen Schichtabschnitts (11) ein Klebeband (17) aufweist.

9. Kernschicht nach einem der Ansprüche 7 und 8, in welcher der wellige Schichtabschnitt (11) und der wellige Zellenabschnitt (12) mehrere vorragende Motive (14) aufweisen, wobei jedes vorragende Motiv des welligen Schichtabschnitts (11) sich aus der von den Erstreckungsrichtungen (X, Y) gebildeten Erstreckungsebene (XY) wesentlich heraus erstreckt.

10. Kernschicht nach einem der Ansprüche 7 bis 9, in welcher der wellige Schichtabschnitt (11) eine allgemeine Zickzackform mit mindestens zwei Buckeln aufweist.

11. Kernschicht nach Anspruch 10, in welcher die mindestens zwei Buckel jeweils einen spitzen Gipfel aufweisen.

12. Strukturelles Sandwichmaterial (50), das eine Kernschicht (1) nach einem der Ansprüche 7 bis 11 sowie mindestens eine an der Kernschicht angebrachte Außenhaut (1a, 1b) aufweist.

## Claims

1. Production method for a core of polymer sandwich structural material, comprising the steps of:
Providing (100, 200, 300, 400) at least one first polymer fabric sheet (8) and one second polymer fabric sheet (9) extending respectively substantially in extension directions (X, Y), where one sheet among the first and second sheets comprises at least one corrugated sheet portion (11) in a sheet thickness direction (Z) substantially perpendicular to the extension directions and where the first and/or second sheets comprises a plurality of adhesive strips (17);
Superimposing (500) the first and second sheets in the sheet thickness direction to obtain a sandwich of sheets (7);
Pressing (600) the sandwich of sheets in the sheet thickness direction such that the sheets adhere to each other in the area of the plurality of adhesive strips;
Stretching (700) the sandwich of sheets in the sheet thickness direction in order to form a cellular structure (4) comprising at least one cell (5), where said cell is provided with a corrugated cell portion (12) on at least one surface (6) ;
Until obtaining a core of polymer sandwich structural material (1) with a density included in a predefined density range, repeating the operations of:
• Disposing (800) a resin (3) at least on the corrugated cell portion of the cellular structure (4; 31); and
• Crosslinking (900) the resin in order to obtain a resined cellular structure (31).

2. Method according to claim 1, wherein the step of providing at least one first polymer fabric sheet (8) and one second polymer fabric sheet (9) comprises:
- Providing (100) a polymer fabric strip (15) extending substantially in the extension directions (X, Y);
- Deforming (200) at least one portion of the polymer fabric strip in a sheet thickness direction (Z) substantially perpendicular to the extension directions, whereby a corrugated strip portion (16) results;
- Disposing (300) at least one adhesive strip (17) on the polymer fabric strip;
- Cutting (400) the strip in order to form at least one first and one second polymer fabric sheets (8, 9) extending respectively substantially in the extension directions, where at least one sheet among the first and second sheets comprises the corrugated strip portion and where at least one sheet among the first and second sheets comprises the adhesive strip.

3. Method according to any one of claims 1 and 2, wherein the first and the second polymer fabric sheets (8,9) respectively comprise a first corrugated sheet portion (24) and a second corrugated sheet portion (25); and
Wherein the first and second sheets (8, 9) are superposed (500) in order to obtain a sandwich of sheets (7) so as to dispose the first and second corrugated sheet portions opposite each other.

4. Method according to any one of claims 1 to 3, wherein the step of pressing (600) the sandwich of sheets (7) comprises heating of the sandwich of sheets in order to activate the adhesive strip (17).

5. Method according to any one of claims 1 to 4, wherein the step of stretching (700) the sandwich of sheets (7) in order to form a cellular structure (4) comprises a step of curing the cellular structure at temperature over a vitreous transition temperature of the polymer fabric in order to obtain an adhesive self-supporting structure (26).

6. Method according to any one of claims 1 to 5, wherein the cellular structure is dipped into a resin (3) bath in order to dispose (800) a resin at least on the corrugated cell portion (12) of the cellular structure (4; 26; 31).

7. Core of polymer sandwich structural material (1) extending substantially in the core extension directions (X', Y') and being intended to be included between an upper surface (1a) and a lower surface (1b), opposite in a core thickness direction (Z'), where said core includes a resined cellular structure (31) comprising at least one cell (5);
Said cellular structure comprises a sandwich of sheets (7), stretched in a sheet thickness direction (Z), comprising at least one first polymer fabric sheet (8) and one second polymer fabric sheet (9) extending respectively substantially in extension directions (X, Y), substantially perpendicular to the sheet thickness direction (Z), where the first and second sheet (8, 9) adhere to each other in the area of a plurality of adhesive strips (17);
A resin (3) is disposed and cross-linked at least on said cell (5) of the cellular structure (4);
Where the core is **characterized in that** one sheet among the first and second polymer fabric sheets comprises at least one corrugated sheet portion (11), deformed in the sheet thickness direction (Z);
**In that** said at least one cell is provided with a corrugated cell portion (12) on at least one surface (6); and
**In that** the resin (3) is disposed and cross-linked at least on the corrugated cell portion of the cellular structure.

8. Core according to claim 7, wherein one sheet among the first and second polymer fabric sheets (8, 9) comprises an adhesive strip (17) in the area of a corrugated sheet portion (11).

9. Core according to any one of claims 7 and 8, wherein the corrugated sheet portion (11) and the corrugated cell portion (12) comprise a plurality of raised motifs (14), where each raised motif (11) of the corrugated sheet portion extends substantially out of the extension plane (XY) formed by the extension directions (X, Y).

10. Core according to any one of claims 7 to 9, wherein the corrugated sheet portion (11) has a general zigzag shape comprising at least two humps.

11. Core according to claim 10, wherein said at least two humps each have a pointed summit.

12. Structural sandwich material (50) comprising a core (1) according to any one of claims 7 to 11 and also at least one outer skin (1a, 1a) attached to said core.
